# EUROPÄISCHE PATENTSCHRIFT

(11) **EP 1 299 623 B1**
(45) Veröffentlichungstag und Bekanntmachung des Hinweises auf die Patenterteilung: **06.09.2006**
(21) Anmeldenummer: 01953906.3
(22) Anmeldetag: 10.07.2001
(51) Int. Cl.: F01N 11/00, F02D 41/14

(54) **SCHALTUNGSANORDNUNG ZUR KOMPENSATION VON STÖRSIGNALEN IN DER REGELSCHLEIFE EINER LINEAREN LAMBDASONDE**
CIRCUIT ARRANGEMENT FOR COMPENSATING PARASITIC SIGNALS IN THE CLOSED LOOP OF A LINEAR LAMBDA PROBE
CIRCUIT PERMETTANT DE COMPENSER DES SIGNAUX PARASITES DANS LA BOUCLE DE REGULATION D'UNE SONDE LAMBDA LINEAIRE

(30) Priorität: 12.07.2000 DE 10033730
(43) Veröffentlichungstag der Anmeldung: 09.04.2003
(73) Patentinhaber: SIEMENS AKTIENGESELLSCHAFT, 80333 München (DE)
(72) Erfinder: BOLZ, Stephan, 93102 Pfatter (DE)
(86) Internationale Anmeldenummer: PCT/DE2001/002571
(87) Internationale Veröffentlichungsnummer: WO 2002/004792

(56) Entgegenhaltungen:
- WO-A-99/18429
- DE-A- 19 722 872
- PATENT ABSTRACTS OF JAPAN vol. 1997, no. 07, 31. Juli 1997 (1997-07-31) & JP 09 065480 A (SONY CORP), 7. März 1997 (1997-03-07)

## Beschreibung

Die Erfindung betrifft eine Regelschleife einer linearen Lambdasonde mit einer Schaltungsanordnung zur Kompensation von Störsignalen gemäß den Merkmalen des Oberbegriffs von Anspruch 1 und 2.

Der Gesetzgeber fördert durch steuerliche Maßnahmen die Entwicklung von Kraftfahrzeugen mit zunehmend niedrigeren Schadstoffemissionen und geringerem Kraftstoffverbrauch.

Dies hat bei Ottomotoren mit stöchiometrischer Gemischbildung (λ=1) zur Entwicklung von SULEV- Fahrzeugen (Super Ultra Low Emission Vehicles) mit extrem niedrigen Emissionen geführt.

Zur Kraftstoffeinsparung sind derzeit Motoren mit direkter Hochdruck-Benzineinspritzung (HPDI, High Pressure Direct Injection) in Entwicklung bzw. Markteinführung. Der Kraftstoff wird hier unter erhöhtem Druck (ca. 150bar) direkt in den Brennraum eingespritzt. Die damit mögliche Gemischaufbereitung kann zwischen fett, stöchiometrisch und mager variieren. Für den Teillastbetrieb des Motors bietet eine magere Gemischbildung nennenswerte Verbrauchsvorteile.

Beide Entwicklungen erfordern eine wesentlich genauere Gemischregelung, als sie mit heute üblichen Lambdasonden (binäre Sprungsonden) möglich ist. Zudem haben binäre Sprungsonden einen extrem eingeschränkten Meßbereich um λ=1. Sie sind also für Messungen im Magerbetrieb λ>1 ungeeignet.

Aus diesem Grunde kommen verstärkt Lambdasonden mit erweitertem, linearem Meßbereich, sogenannte lineare Lambdasonden, und Schaltungsanordnungen zu deren Betrieb zum Einsatz.

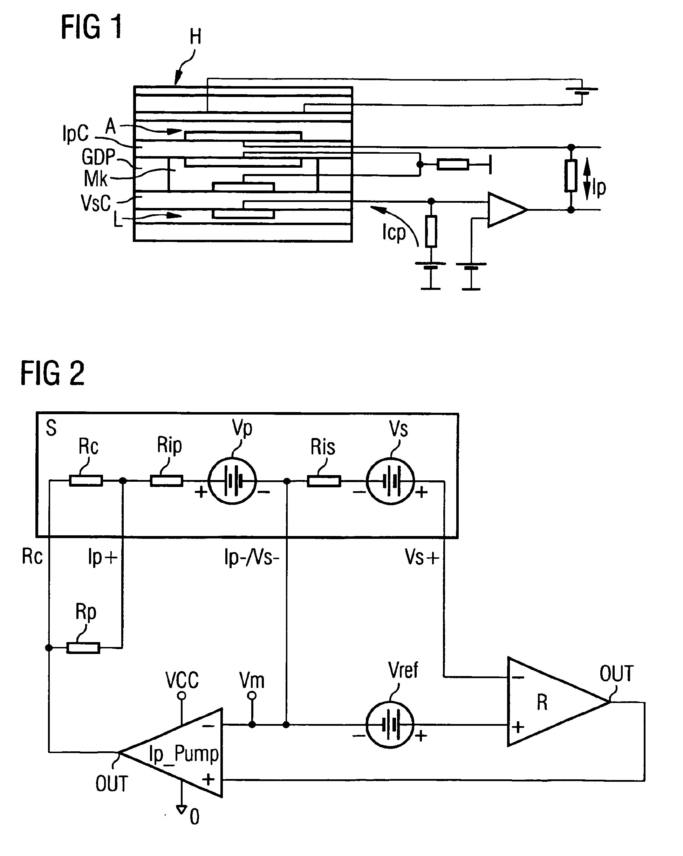

Figur 1 zeigt eine an sich bekannte lineare Lambdasonde. Diese weist ein Heizelement H, zwei Elektrodenpaare VsC und IpC, sowie eine Meßkammer Mk, die über eine Diffusonsbarriere GDP mit dem Abgasstrom A verbunden ist, auf. Das erste Elektrodenpaar VsC ist zwischen Meßkammer Mk und Luft L angeordnet und wird - ähnlich wie bei der Sprungsonde - zur Messung der Sauerstoff-konzentration in der Meßkammer Mk verwendet. Das zweite Elektrodenpaar IpC ist zwischen der Meßkammer Mk und dem Abgasstrom A angeordnet. Es erlaubt - bei Anlegen eines Stromes Ip entsprechender Polarität - Sauerstoffionen aus der Meßkammer Mk heraus oder in sie hinein zu pumpen; Bezeichnung deshalb: Pumpelektroden.

Somit ist es möglich, ein dynamisches Gleichgewicht zwischen Sauerstofffluß durch die Diffusionsbarriere und Sauerstoffionenfluß durch das Pumpelektrodenpaar zu erzeugen. Als Regelkriterium eignet sich dabei die mit den Meßelektroden bestimmte Sauerstoffkonzentration in der Meßkammer Mk. Ein Vorzugswert ist z.B. Vs=450mV für λ=1.

Der in diesem Falle fließende Pumpstrom Ip ist ein Maß für die Sauerstoffkonzentration im Abgas. (und nach numerischer Umwandlung auch für λ).

Einige Lambdasonden benötigen zum Betrieb eine künstliche Sauerstoffreferenz. Man erzeugt diese, indem man mittels eines kleinen Stromes Icp (z.B. 25µA) Sauerstoff aus der Meßkammerm zur positiven Referenzelektrode Vs+ pumpt. Die dadurch entstandene Sauerstoffkonzentration dient nun ihrerseits als Referenzpunkt zur Messung der Sauerstoffkonzentration in der Meßkammer Mk. Die Auswerteschaltung muß diesen Strom bereitstellen.

Die Relation von Sauerstoffkonzentration im Abgas zu Pumpstrom Ip wird von einigen Sondenparametern beeinflußt. Fertigungsbedingt streut der dynamische Widerstand der Diffusionsbarriere. Dies hätte eine Abweichung des Übersetzungsverhältnisses zur Folge (Verstärkungsfehler). In der Fertigung wird dies durch Messung und Einfügen eines Kalibrierwiderstandes Rc in den Sondenstecker kompensiert.

Figur 2 zeigt ein Prinzipschaltbild einer bekannten Vorrichtung zum Betrieb einer linearen Lambdasonde einer Brennkraftmaschine.

Aus der Sonde S sind ein erster Anschluß Vs+, ein zweiter AnschlußVp-/Vs-, ein dritter Anschluß Vp+ und ein vierter Anschluß Rc herausgeführt und mit der Auswerteschaltung verbunden. Die Sondenheizung und ihre Anschlüsse sind nicht dargestellt.

Der invertierende Eingang eines Reglers ist mit dem ersten Anschluß Vs+ der Sonde S verbunden, sein nichtinvertierender Eingang ist über eine Referenzspannung Vref mit einer Mittenspannung Vm verbunden (Vm≈Vcc/2), wobei Vcc (üblicherweise 5V) die Versorgungsspannung der Schaltung ist.

Mit der Mittenspannung Vm sind auch der zweite Sondenanschluß Vp-/Vs- und der invertierende Eingang einer Pumpstromquelle Ip_Pump verbunden, deren nichtinvertierender Eingang mit dem Ausgang des Reglers verbunden ist.

Der Ausgang der Pumpstromquelle Ip_Pump ist mit dem vierten Eingang Rc der Sonde S verbunden.

Da der Widerstand Rc aufgrund seiner Einbaulage im Sondenstecker erheblichen Umweltbelastungen ausgesetzt ist, wird ihm im Steuergerät ein weiterer Widerstand Rp an den Anschlüssen Vp+ und Rc parallel geschaltet. Dies reduziert den Einfluß eines Toleranzfehlers von Rc auf die Meßgenauigkeit des Pumpstromes Ip.

Die Funktionsweise der in Figur 2 dargestellten, bekannten Schaltungsanordnung zum Betrieb einer linearen Lambdasonde (ohne Icp Erzeugung) ist folgende:

Der Anschluß Vp-/Vs- der Sonde ist ebenso wie die Referenzspannung Vref mit der Mittenspannung Vm verbunden. Diese dient als Bezugsspannung der Schaltung.

Der Regelverstärker R vergleicht die Nerstspannung Vs der Sonde mit der Referenzspannung Vref (beispielsweise 450mV) und erzeugt eine Ausgangsspannung, die von der nachfolgenden Pumpstromquelle I_Pump in einen entsprechenden Strom Ip umgewandelt wird, der dann durch die Pumpzelle zur Mittenspannung Vm fließt. Der Pumpstrom führt zu einer Änderung der Sauerstoffkonzentration in der Meßkammer der Sonde, was wiederum eine Änderung der Nernstspannung Vs zur Folge hat. Die Differenz von Vs und Vref (=ΔVs) stellt die Regelabweichung der Schleife dar. Der Pumpstrom Ip kann als Spannungsabfall am Widerstand Rp/Rc gemessen werden. Er dient als Maß für die Sauerstoffkonzentration im Abgas.

Im stabilen Regelzustand (λ=1 in der Meßkammer) beträgt die Nernstspannung Vs beispielsweise exakt 450mV (ΔVs=0).

Es herrscht ein Gleichgewicht zwischen Sauerstofffluß durch die Diffusionsbarriere und Sauerstoffionenfluß, bedingt durch den Pumpstrom Ip. Der maximale Bereich der Ausgangsspannung der Pumpstromquelle I_Pump reicht von ca 0.1V bis 4.9V.

Ersatzweise kann der Regelverstärker auch als OTA (Operational Transconductance Amplifier) ausgeführt sein, dessen Ausgangsstufe durch eine Stromquelle gebildet wird. Hier ist das Ausgangssignal bereits ein Strom und nicht - wie beim Operationsverstärker üblich - eine Spannung.

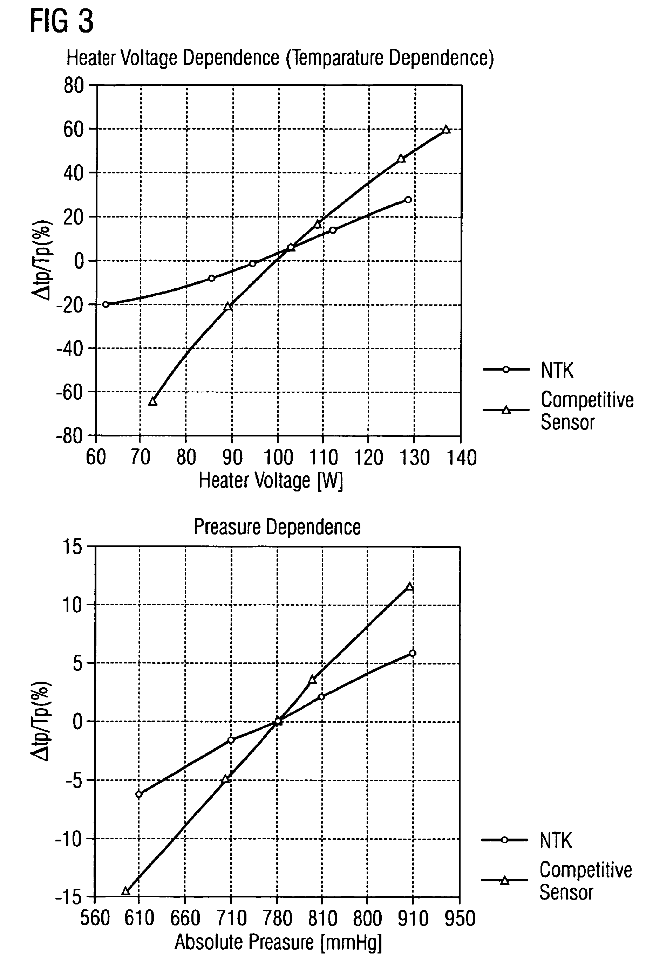

Des weiteren besitzt der dynamische Widerstand der Diffusionsbarriere eine in Figur 3 dargestellte Temperatur- und Druckabhängigkeit, was wiederum zu Fehlern im Übersetzungsverhältnis führt. Man begegnet der Temperaturabhängigkeit durch Messung der Sondentemperatur und deren Regelung mittels eines in der Sonde eingebauten Heizelements. Aus Kostengründen wird dabei auf ein separates Thermoelement verzichtet. Man mißt statt dessen den stark temperaturabhängigen Innenwiderstand der Sonde (Sondenimpedanz). Die Druckabhängigkeit kann meßtechnisch nicht in der Sonde erfaßt werden. Wird kein separater Drucksensor verwendet, so versucht man die Abhängigkeit durch eine modellbasierte Berechnung im Mikrocontroller zu ermitteln und numerisch zu kompensieren.

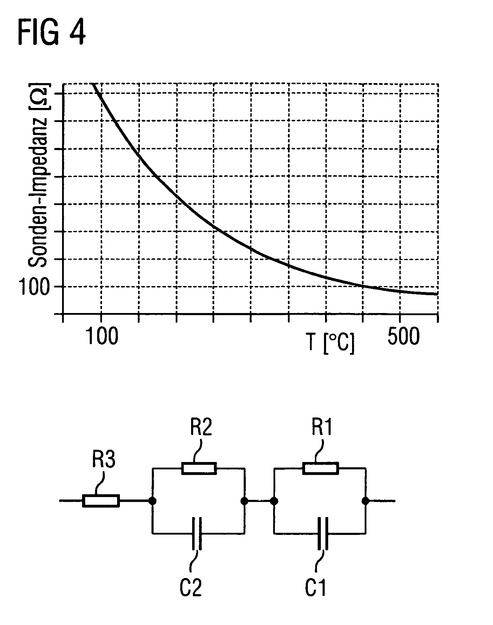

Figur 4 zeigt die Sondenimpedanz Ris der Sonde S und deren-Temperaturabhängigkeit. Die Sondenimpedanz läßt sich als temperaturabhängige, komplexe Impedanz mit mehreren RC-Gliedern darstellen, wobei:
- R1/C1: den Übergangswiderstand zwischen Elektroden und Keramikmaterial,
- R2/C2: den Übergang zwischen den Korngrenzen der Keramiksinterkörner, und
- R3: den Eigenwiderstand des Sintermaterials repräsentiert.

Da eine der Elektroden der Pumpzelle dem Abgas ausgesetzt ist, altert ihr Innenwiderstand sehr stark. Man verwendet deshalb die Nernstzelle Vs zur Messung der Sondentemperatur. Auch hier altert R1 und sollte deshalb zur Temperaturmessung nicht herangezogen werden. Da die Zeitkonstante R1*C1 den größten Wert (tiefste Frequenz) besitzt, kann durch geeignete Wahl der Meßfrequenz ihr Einfluß reduziert werden. Man mißt also die Impedanz der Reihenschaltung von R2/C2 und R1. Die Impedanz Ris einer typischen linearen Lambdasonde beträgt bei einer Temperatur von etwa 500°C bis 700°C (und einer Meßfrequenz von 3kHz) ca. 100Ω.

Messung des Innenwiderstandes Ris: ein bekanntes Meßverfahren zur Bestimmung von Ris ist die Beaufschlagung des Sondenanschlusses Vs+ mit einem Wechselstrom, beispielsweise 50µA (Spitze-Spitze, im folgenden abgekürzt ss). Durch diesen Wechselstrom entsteht an Ris eine Wechselspannung von 500µA*100Ω = 50mV (ss), die der Nernstspannung Vs, dem eigentlichen Sondensignal, als Störsignal überlagert ist.

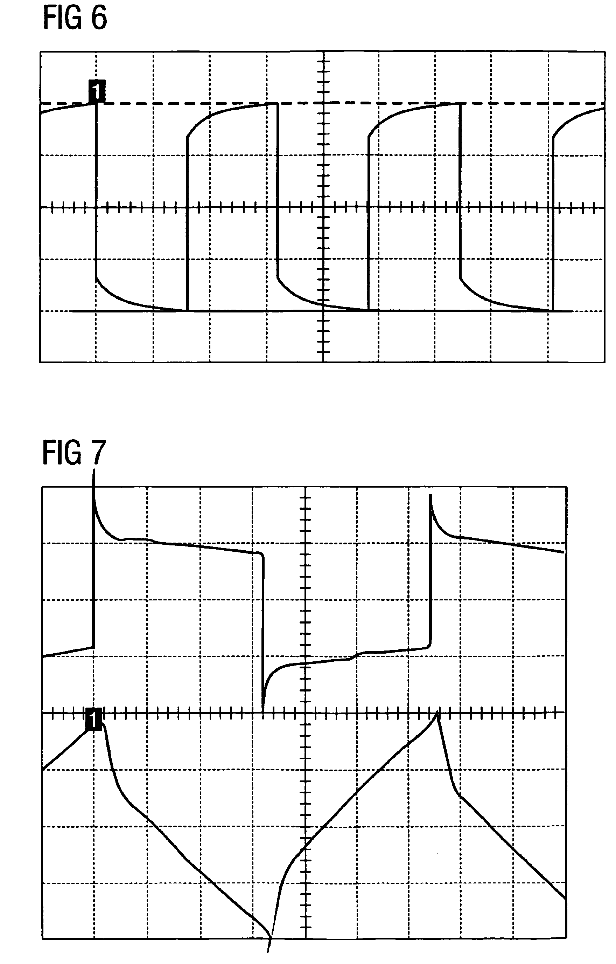

Figur 6 zeigt einen typischen Spannungsverlauf des - für die Nernstspannung ein Störsignal bildenden - Wechselspannungssignals. Das Signal wird in einem Verstärker V beispielsweise um den Faktor 10 verstärkt und anschließend in einem Gleichrichter GLR gleichgerichtet. Die so entstandene Gleichspannung Vri kann nun einem Mikroprozessor zur Temperaturregelung zugeführt werden.

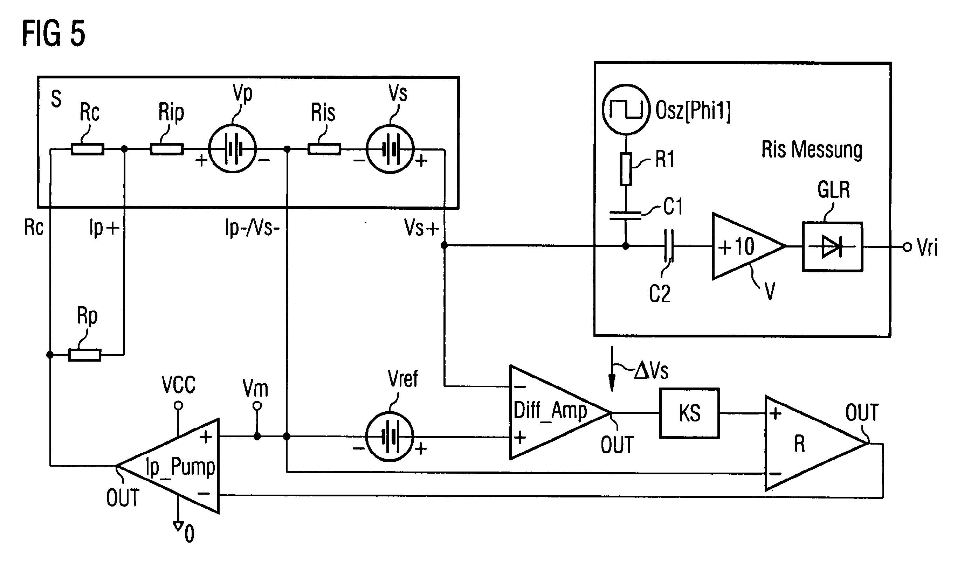

Die Erzeugung des Wechselstromes erfolgt beispielsweise, wie in Figur 5 dargestellt, mittels eines 3kHz-Rechteckoszillators OSZ, der mit einer Spannung Vcc versorgt wird. Über einen hochohmigen Widerstand R1 und einen Entkoppelkondensator C1 wird das Signal zum Sondenanschluß Vs+ geleitet.

Ein prinzipielles Problem dieser Schaltungsanordnung ist die oben erwähnte, wechelseitige Beeinflussung von Vs und diesem Störsignal, da dieses Störsignal auch am Eingang des Reglers erscheint und eine Regelabweichung darstellt. Der Regler wird, im Rahmen seiner Bandbreite, versuchen, diese Regelabweichung auszugleichen. Dazu ändert er den Pumpstrom Ip, was wiederum Auswirkungen auf die Nernstspannung Vs hat. Da der Pumpstrom Ip die Meßgröße für λ ist, wird das primäre Sondensignal verfälscht. Figur 7 macht diesen Sachverhalt anschaulich. Bei dem 3kHz-Signal (oberes Signal) werden die Spitze und die Dachschräge durch das Vs-Signal verfälscht, bei dem Vs_Signal (unteres Signal) ist das 3kHz-Dreiecksignal unerwünscht.

Aus der DE 197 22 872 A1 ist eine Schaltung zur Messung des Elektrodenstroms eines keramischen Gassensors bekannt. Dort wird der Leckstrom durch drei Schaltungsteile kompensiert. Ein erstes Schaltungsteil erfasst den von einer ersten Sensorelektrode über einen Strommessshunt fließenden Messstrom. Ein zweiter Schaltungsteil erzeugt einen Strom, dessen Betrag dem des von dem ersten Schaltungsteil erfassten Messstroms entspricht. Dieser vom zweiten Schaltungsteil erzeugte Strom fließt über einen Stromrückführshunt zu einer zweiten Sensorelektrode. Ein dritter Schaltungsteil verstärkt die über den Shuntwiderständen abfallende Spannungsdifferenz und wandelt diese in ein auf ein Bezugspotenzial bezogenes Messsignal.

Weiter ist aus der WO 99/18429 ein Verfahren zum Betreiben eines Gassensors bekannt, bei dem an eine elektrische Heizung einer beheizbaren ionenleitenden Keramik des Gassensors ein pulsweitenmoduliertes Heizspannungssignal angelegt wird und dem Ausgangssignal der Sensorelektroden ein Kompensationssignal überlagert wird, das im Wesentlichen gegentaktförmig und invertiert zu dem pulsweitenmodulierten Heizspannungssignal ausgebildet ist.

Aufgabe der Erfindung ist es, das im Fehlersignal ΔVs enthaltene, für die Lambdaregelung unerwünschte Störsignal so zu reduzieren, daß es die Pumpstromregelung nicht mehr beeinflußt.

Diese Aufgabe wird erfindungsgemäß dadurch gelöst, daß eine Kompensationsschaltung in den Pumpstromregelkreis eingefügt wird, wie sie im Anspruch 1 und 2 definiert ist.

Ausführungsbeispiele nach der Erfindung werden nachstehend anhand einer schematischen Zeichnung näher erläutert.

In der Zeichnung zeigen:
- Figur: 1 eine Prinzipschaltung einer linearen Lambdasonde,
- Figur 2: eine bekannte Schaltungsanordnung zum Betrieb einer linearen Lambdasonde,
- Figur 3: Temperatur- und Druckabhängigkeit des Übersetzungsverhältnisses einer linearen Lambdasonde,
- Figur 4: Temperaturabhängigkeit und Ersatzschaltbild der Sondenimpedanz einer linearen Lambdasonde,
- Figur 5: eine prinzipielle Schaltungsanordnung zum Betrieb einer linearen Lambdasonde mit einer erfindungsgemäßen Kompensationsschaltung
- Figur 6: einen typischen Kurvenverlauf des Störsignals,
- Figur 7: die wechselseitige Beeinflussung des Störsignals und des Pumpstroms,
- Figur 8: ein Schaltbild eines ersten Ausführungsbeispiels einer Kompensationsschaltung,
- Figur 9: Störsignal, Kompensationssignal und Restsignal der Schaltung nach Figur 8,
- Figur 10: den Integrator aus der Kompensationsschaltung nach Figur 8,
- Figur 11: Ausgangssignal des Integrators bei ausgeschaltetem Signal Phi1 und Ansteuersignal konstant 1.75V,
- Figur 12: Ausgangssignal des Integrators bei eingeschaltetem Signal Phi1 und Ansteuersignal konstant 1.75V,
- Figur 13: Ausgangssignal des Integrators bei eingeschaltetem Signal Phi1 und Ansteuersignal 1.5kHz,
- Figur 14: Ausgangssignal des Integrators bei eingeschaltetem Signal Phi1 und Ansteuersignal 6kHz,
- Figur 15: Ausgangssignal des Integrators bei eingeschaltetem Signal Phi1 und Ansteuersignal 3kHz-90°phasenverschoben,
- Figur 16: Ausgangssignal des Integrators bei bei eingeschaltetem Signal Phi1 und Ansteuersignal 3kHz ohne Phasenverschiebung,
- Figur 17: eine zweistufige Kompensationsschaltung,
- Figur 18: die Signalverläufe bei der zweistufigen Kompensation, und
- Figur 19: eine in den Regler integrierte Kompensationsschaltung.

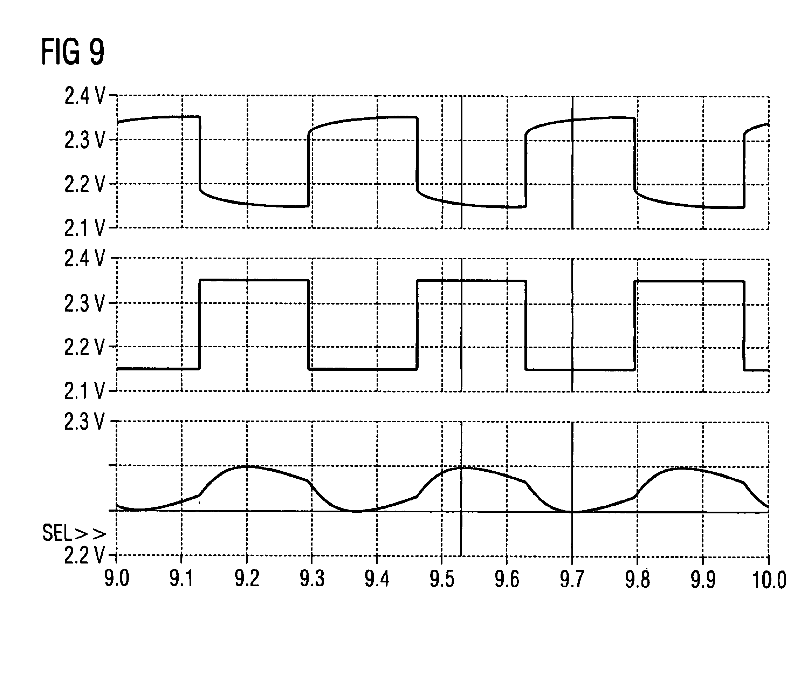

Der Erfindung liegt die Überlegung zugrunde, daß vom Störsignal (Figur 6) zwar nicht die Amplitude bekannt ist, wohl aber der prinzipielle Kurvenverlauf (Rechteck mit Zeitkonstante), Frequenz und Phasenlage, da das erzeugende Signal ja aus dem lokalen Oszillator OSZ, V12, V15 stammt. Subtrahiert man von diesem Störsignal ein weiteres Rechtecksignal (Kompensationssignal) gleicher Amplitude und Frequenz, jedoch mit 180° verschobener Phase, wie in Figur 9 dargestellt, so löschen sich die beiden Signale weitgehend aus (Filterung im Zeitbereich).

Die Grösse des Restsignals wird von folgenden Faktoren bestimmt:
- Phasendifferenz zwischen Störsignal und Kompensationssignal (werden beide Signale lokal erzeugt, so kann die Phasendifferenz vernachlässigbar klein sein),
- Amplitudendifferenz zwischen den beiden Signalen (diese wird mit der weiter unten beschriebenen Schaltung minimiert),
- Differenzen im Signalverlauf (haben das Störsignal und das Kompensationssignal unterschiedliche Kurvenformen, etwa Rechteck mit Zeitkonstante und reines Rechteck, so bleibt die Zeitkonstante im Restsignal erhalten, sie kann jedoch durch schrittweise Annäherung der Kurvenverläufe weiter verringert werden.

Das Störsignal und das Kompensationssignal (Figur 9 oben und mitte) haben Amplituden von ca 200mV (ss), das Restsignal (Figur 9 unten), hat nach geringfügiger Tiefpaßfilterung (τ=20µs)dann nur noch eine Amplitude von 30mV (ss). Das Störsignal ist also um ca. 16dB abgeschwächt worden.

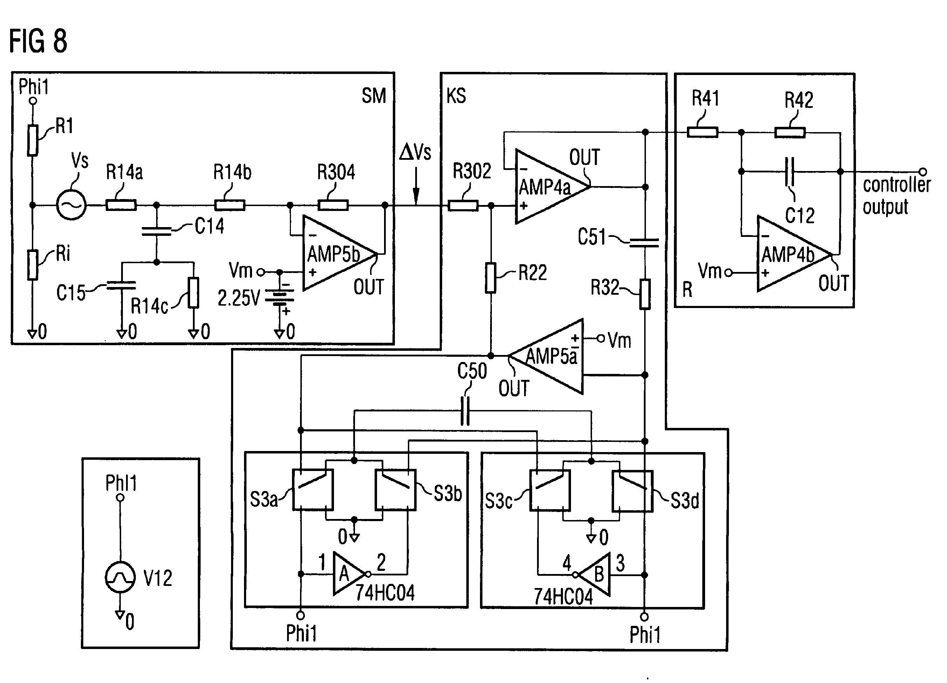

Figur 8 zeigt eine erfindungsgemäße Schaltung KS zur Kompensation von Störsignalen in der Regelschleife einer linearen Lambdasonde. Um das Verhalten der Kompensationsschaltung richtig darzustellen, wird sie im Zusammenhang mit einem Sondenmodell SM, dem aus Figur 5 bekannten Regler und dem 3kHz-Oszillator V12 betrachtet und anhand ihrer Funktion näher beschrieben.

Das Sondenmodell SM erzeugt dabei ein Signal, das dem realen Störsignal, wie in Figur 6 dargestellt, möglichst nahe kommt. Dazu erzeugt die Signalquelle V12 zunächst ein Rechtecksignal Phi1 mit einer Frequenz von 3kHz und 0V/5V Pegeln. Dieses Signal wird dann mittels eines Spannungsteilers R1/Ri auf beispielsweise 200mV (ss) mit 100mV Offset abgeschwächt. Eine weitere Signalquelle Vs erzeugt zusätzlich noch einen Offset von beispielsweise 2.15V. Damit erhält man an ihrem Ausgang ein Rechtecksignal von 200mV (ss) mit einem Offset von 2.25V, was den Verhältnissen bei einer realen Lambdasonde entspricht.

Das Rechtecksignal gelangt nun auf ein Filternetzwerk R14a, R14b, R14c, C14 und C15, welches dem Rechtecksignal die gewünschte Kurvenform gibt (Rechteck mit Zeitkonstante).

Ein Verstärker AMP5b bildet zusammen mit Widerständen R14a, R14b und R304 einen Inverter, so daß an seinem Ausgang das nun gefilterte 3kHz-Signal ΔVs mit einer Amplitude von 200mV (ss) entsteht. Sein nichtinvertierender Eingang liegt auf der Mittenspannung Vm (2.25V).

Die Kompensationsschaltung KS selbst besteht aus zwei Verstärkern AMP4a und AMP5a, vier CMOS-Schaltern S3a, S3b, S3c, S3d, drei Widerständen R22, R32, R302, und aus zwei Kondensatoren C50 und C51.

Der invertierende Eingang von AMP4a, der als Buffer wirkt, ist mit seinem Ausgang verbunden, so daß er einen Verstärker mit Verstärkung 1 bildet. (Durch Einfügen zweier nicht dargestellter Widerstände zwischen invertierendem Eingang und Ausgang bzw. invertierendem Eingang und Vm lässt sich die Schaltung auch auf grössere Verstärkungsfaktoren einstellen.)

Der nichtinvertierende Eingang von AMP4a ist über einen Widerstand R302 mit dem Ausgang von AMP5b und über einen Widerstand R22 mit dem Ausgang des Verstärker AMP5a verbunden. Der nichtinvertierende Eingang von AMP5a liegt auf Vm. Der invertierende Eingang ist über eine Reihenschaltung von C51 und R32 mit dem Ausgang von AMP4a sowie den Eingängen der Schalter S3b und S3d verbunden. Der Ausgang von AMP5a ist zusätzlich mit den Eingängen der Schalter S3a und S3c verbunden.

Zwischen den Ausgängen der Schalter S3a-S3b und den Ausgängen der Schalter S3c-S3d liegt Kondensator C50. Die Steuereingänge von S3a und S3d sind mit der Signalquelle V12 verbunden, die Steuereingänge von S3b und S3d sind über je einen Inverter (74HC04) mit Phi1 verbunden.

Dieser Kompensationschaltung KS ist der Regler R nachgeschaltet. Die gezeigte Ausführung stellt einen I-Regler dar, der höhere Frequenzanteile stärker filtert. Er besteht aus einem Verstärker AMP4b, Widerständen R41, R42 und einem Kondensator C12. Der nichtinvertierende Eingang von AMP4b ist mit der Mittenspannung Vm verbunden. Der invertierende Eingang ist über R41 mit dem Ausgang von AMP4a und über eine Parallelschaltung von R42 und C12 mit dem Ausgang von AMP4a verbunden. R42 ist ein Ersatzwiderstand für die Simulation und repräsentiert die endliche Verstärkung von AMP4b. Er ist im realen Betrieb nicht vorhanden.

Kernstück der Kompensationsschaltung KS ist der aus AMP5a, C50 und R32 bestehende Integrator. Die Schalter S3a, S3b, S3c, S3d bilden zusammen mit den Invertern 74HC04 einen Wechselschalter. Dieser polt den Kondensator C50 im Takt des Oszillatorsignals Phi1 (3kHz) zwischen dem invertierenden Eingang von AMP5a und dessen Ausgang periodisch um, so daß eine am Kondensator C50 aufintegrierte Spannung am Ausgang des Integrators Amp5a als Rechtecksignal erscheint.

Durch das Umschalten mit dem Oszillatorsignal Phi1 wird ausserdem erreicht, daß der Integrator AMP5a nur solche Signalanteile von ΔVs aufintegriert, die dazu phasensynchron sind. Alle anderen Signalanteile werden ausgemittelt.

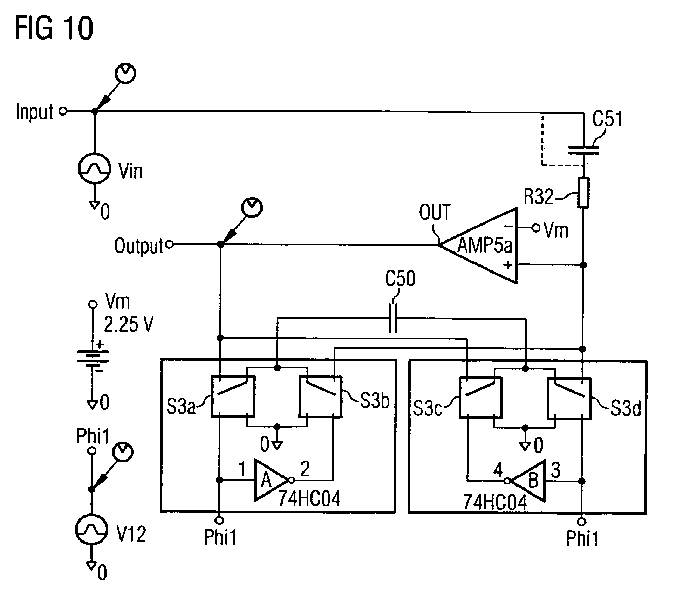

Die Figuren 10 bis 16 und deren Beschreibung dienen der Veranschaulichung der Arbeitsweise des Integrators Amp5a.

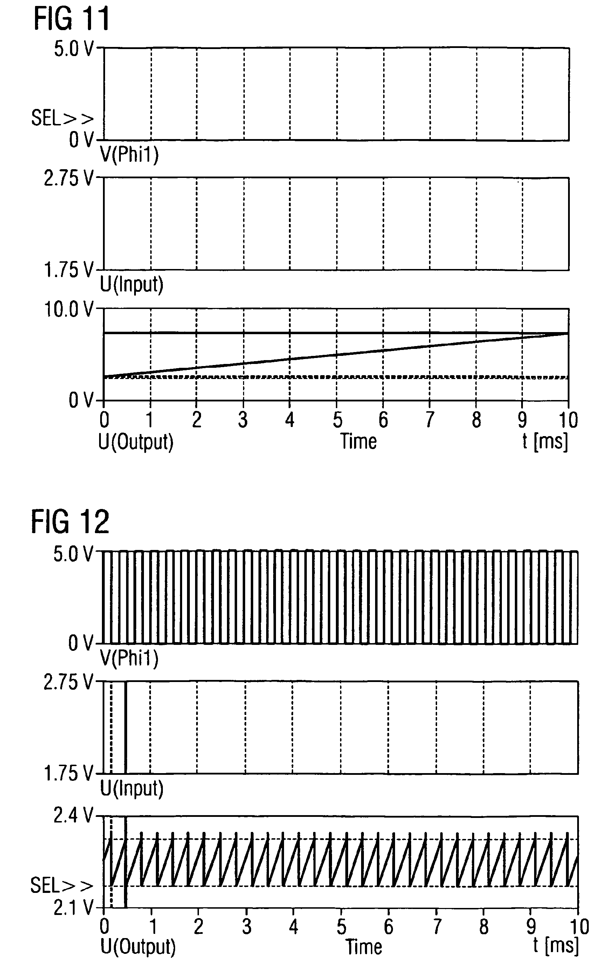

Der in Figur 10 nochmals dargestellte Integrator wird ohne die Signalrückführung durch den Widerstand R22 betrachtet. Auch R302 und Amp4a sind weggelassen, so daß die Ansteuerung direkt an Kondensator C51 erfolgt, der zudem überbrückt ist (strichlierte Linie), um das Verhalten bei Gleichspannungsansteuerung darstellen zu können, wie Figur 11 zeigt.

Bei ausgeschaltetem Oszillatorsignal (Phi1 = 0V), Figur 11 oben, ist das Ansteuersignal Vin eine Gleichspannung mit 1.75V, Figur 11 mitte. Da der Bezugspunkt des Integrators bei Vm = 2.25V liegt (Spannung am nichtinvertierenden Eingang von Amp5a), müssen Ansteuerspannung und seine Ausgangsspannung ebenfalls auf Vm bezogen werden.

Der Wert der auf Vm bezogenen Ansteuerspannung beträgt also ΔVin=1.75V-Vref=-0.5V. Er wird mit der Zeitkonstante τ=R32*C50 aufintegriert. Die Ausgangsspannung des Integrators erreicht nach der Zeit T den Wert: ΔVout={-ΔVin*T/τ}. Mit den im Beispiel gewählten Werten von ΔVin=-0.5V, T=10ms, R32= 10kOhm und C51=0.1µF ergibt sich: ΔVout = 5V.

Wird nun das Oszillatorsignal Phi1 zugeschaltet (Figur 12 oben), so wird der Integrationskondensator C50 periodisch mit dem Oszillatorsignal Phi1 zwischen Eingang und Ausgang des Integrators umgeschaltet: die Integration jeder Periode des Signals ΔVs am Integrator Amp5a erfolgt in zwei Phasen.

Während der ersten Phase (Phi1=0V) wird ΔVin auf ca. 2.34V (Vm+0.09V) am Ausgang von Amp5a aufintegriert (Figur 12 unten).

Zu Beginn der zweiten Phase (Phi1=5V) wird Kondensator C50 umgeschaltet und Vout springt auf ca. 2.17V (Vm-0.08V). Anschliessend (in der folgenden Signalperiode) wird in der folgenden ersten Phase wieder bis 2.34V aufintegriert u.s.w..

Im Mittel bleibt die Ausgangsspannung also trotz Eingangsgleichspannung stabil auf 2.25V. ΔVout=(2.34V-2.17V)=0.17V.

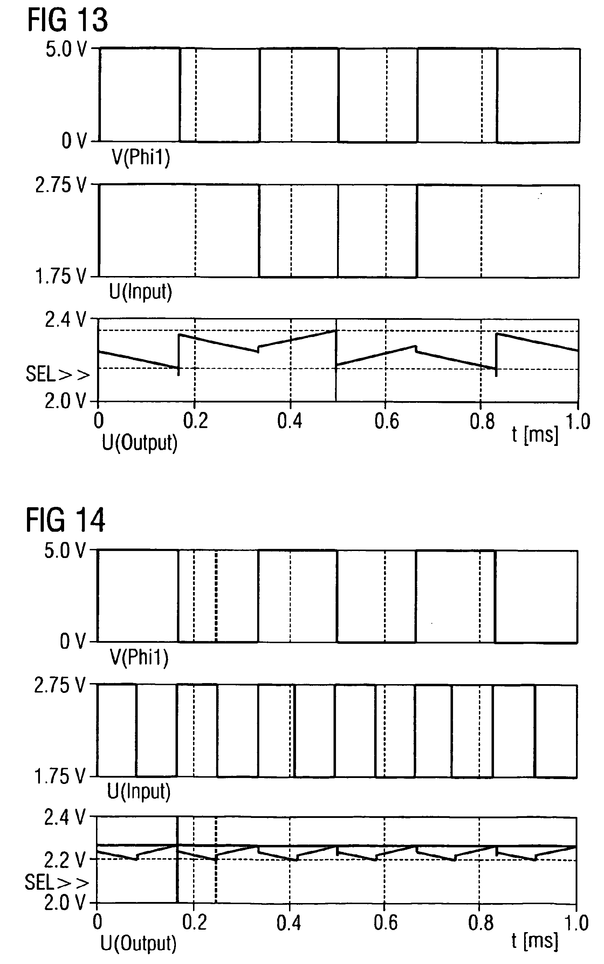

Verändert man die Frequenz des Ansteuersignals beispielsweise auf 1.5kHz (Figur 13 mitte) oder 6kHz (Figur 14 mitte) gegenüber dem Oszillatorsignal Phi1 (Figur 13 oben, Figur 14 oben), so entsteht am Ausgang von Amp5a ebenfalls nur ein relativ geringes, fast konstantes Signal. Ursache dafür ist, daß der Integrator über weniger (1.5kHz) oder mehr (6kHz) als eine Periodenhälfte des Ansteuersignals mittelt, bevor er umschaltet. Entsprechend liegen die gemittelten Restamplituden ΔVout(1.5kHz) bei ungefähr 184mV (Figur 13 unten) und ΔVout (6kHz) bei ungefähr 60mV (Figur 14 unten). Für Wechselspannungssignale sinkt die Verstärkung monoton mit 20dB pro Dekade Frequenzerhöhung.

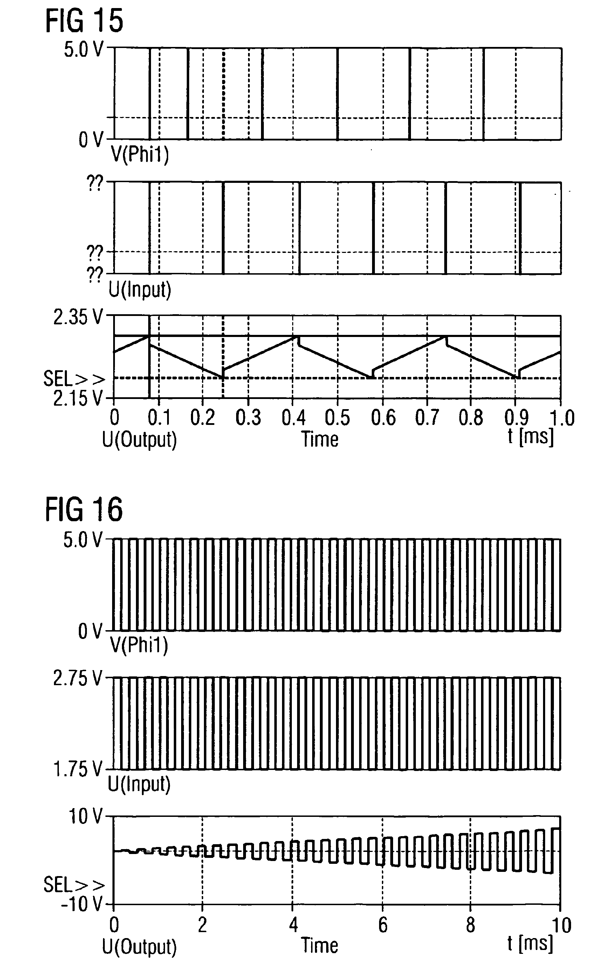

Verändert man bei gleicher Frequenz die Phasenlage zwischen Phi1 (Figur 15 oben) und dem Ansteuersignal um beispielsweise 90° (Figur 15 mitte), so ergibt sich eine Restamplitude ΔVout von 102mV (Figur 15 unten). Auch hier wird das Ansteuersignal ausgemittelt.

Erst wenn Phi1 und das Ansteuersignal gleiche Frequenz und Phasenlage haben, wie in Figur 16 oben und mitte dargestellt, ergibt sich am Integratorausgang ein stetig anwachsendes Signal (Figur 16 unten). Integrations- und Signalphase laufen gleich, so daß keine Mittelung, sondern eine Integration, analog zur Ansteuerung mit Gleichspannung, erfolgt.

Da das Ansteuersignal Vin und der Integrator gleiches Bezugspotential (2.25V) besitzen, kann die Ankopplung mittels des Kondensators C51 erfolgen. Auf diese Weise wird der Einfluß einer etwaigen Regelabweichung der Pumpstromregelung (ΔVs) ohne Nachteile reduziert.

Die Funktion des Integrators in der realen Kompensationsschaltung (Figuren 5 und 8) erklärt sich aus dem Verhalten des Integrators, wie in den Figuren 10 bis 16 beschrieben.

Solange das Ansteuersignal Vin keine zum Oszillatorsignal Phi1 frequenz- und phasensynchronen Signalanteile hat, wird der Ausgang des Integrators Amp5a lediglich eine Gleichspannung (mit Vm=2.25V) aufweisen. Die Ausgangsimpedanz von Amp5a ist dabei klein. Das Signal ΔVs gelangt über den Widerstand R302 (Figur 8) an den nichtinvertierenden Eingang von Amp4a, wobei es durch den Spannungsteiler R302, R22 abgeschwächt wird. Haben die Widerstände R302 und R22 den gleichen Wert, so beträgt die Abschwächung 50%.

Vom Ausgang des Verstärkers Amp4a gelangt es weiter zum Eingang des Reglers R. Insgesamt hat die Kompensationsschaltung für ΔVs also nur die Wirkung eines Spannungsteilers. Dies ist aber ohne Bedeutung, da der Amplitudenverlust durch geeignete Auslegung des Reglers R ausgeglichen werden kann.

Hat das Ansteuersignal Vin jedoch zum Oszillatorsignal Phi1 frequenz- und phasensynchrone Signalanteile, etwa das als Störsignal wirkende 3kHz-Signal der Ris-Messung (Figur 6), so wird dieser Anteil am Integrator Amp5a aufintegriert. Am Ausgang von Amp5a erscheint nun ein 3kHz-Rechtecksignal mit steigender Amplitude, das zu dem im Differenzsignal ΔVs enthaltenen Störsignal um 180° phasenverschoben ist.

Als Folge dieses Ausgangssignals wird die 3kHz-Amplitude am nichtinvertierenden Eingang von Amp4a reduziert. Entsprechend sinkt auch die 3kHz-Amplitude am Ausgang von Amp4a, so daß auch das Ansteuersignal des Integrators Amp5a reduziert wird.

Im Endeffekt stellt sich ein Gleichgewichtszustand ein, wobei sich der Störsignalanteil in ΔVs und das Kompensationssignal (3kHz-Ausgangssignal des Integrators Amp5a) weitgehend aufheben, so daß am Integratoreingang und damit am Ausgang der Kompensationsschaltung nur noch ein Restsignal verbleibt. Alle anderen Frequenzanteile von ΔVs werden hingegen nur um die oben beschriebenen 50% abgeschwächt.

Die auf diese Art entstandene Regelschleife kompensiert das Störsignal komplett, wenn die Kurvenform ein Rechteck ist. Da dies in der Praxis jedoch nicht der Fall ist, kann man die Kompensiation verbessern, indem man sie schrittweise dem realen Kurvenverlauf annähert.

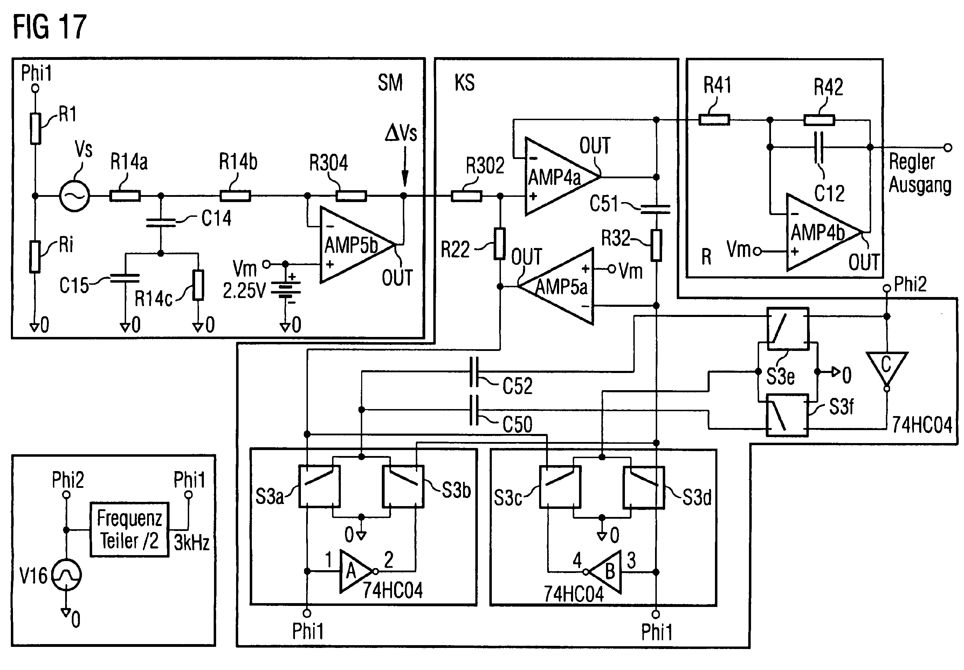

Eine Erweiterung zur Mehrstufigkeit (mehrere Integrationsphasenabschnitte pro Signalperiode) erfolgt, indem man zum Integrator wenigstens einen weiteren Kondensator und weitere Umschalter hinzufügt und die Integration des 3kHz-Signals mit diesen Kondensatoren stufenweise durchführt. Eine entsprechende Schaltung ist in Figur 17 dargestellt.

Es wird ein weiterer Kondensator C52 eingefügt, dessen einer Anschluß parallel zum Kondensator C50 mit den Ausgängen der Schalter S3a, S3b verbunden ist. Der andere Anschluß von C50 ist nun nicht mehr mit den Ausgängen der Schalter S3c, S3d, sondern mit dem Eingang eines Schalters S3f verbunden. Ebenso ist der andere Anschluß von C52 mit dem Eingang eines Schalters S3e verbunden. Die Ausgänge von S3e und S3f sind mit den Ausgängen von S3c, S3d verbunden. Der Steuereingang von S3e ist mit einer weiteren Signalquelle V15 verbunden, die ein Oszillatorsignal Phi2 mit einer Frequenz von 6kHz erzeugt. Der Steuereingang von S3f ist über einen weiteren Inverter (74HC04) ebenfalls mit der Signalquelle V15 verbunden. Das Oszillatorsignal (Phil=3kHz) kann beispielsweise durch Halbierung des 6kHz-Oszillatorsignals (Phi2) mittels eines Frequenzteilers (Fig. 17) erzeugt werden.

Durch diese Erweiterung wird die Integration jeder Periode des Signals ΔVs am Integrator Amp5a nun in 4 Phasenabschnitte zerlegt:

In Phasenabschnitt 1 (0%-25% der Periodendauer des Oszillatorsignals Phi1) sei Kondensator C50 über Schalter S3f mit der übrigen Schaltung verbunden. Er ist also als Integrationskondensator aktiv. Bedingt durch die Regelwirkung der Kompensationsschaltung KS entsteht am Ausgang von AMP5a ein phasensynchroner Amplitudenwert, der dem (zu diesem Zeitpunkt wegen der Zeitkonstante geringeren) Wert des Störsignals entspricht. Kondensator C52 ist in dieser Zeit abgeschaltet.

In Phasenabschnitt 2 (25%-50%) wird durch den Pegelwechsel der Signalquelle V15 Schalter S3f geöffnet und Schalter S3e geschlossen. Jetzt ist Kondensator C52 als Integrationskondensator aktiv. Er integiert nun den (angestiegenen) Wert des Störsignals. Entsprechend ist in dieser Phase die Ausgangsspannung des Integrators etwas höher.

Phasenabschnitt 3 (50%-75%) entspricht Phasenabschnitt 1, wobei aber, nun bedingt durch die Stellung der Wechselschalter, Kondensator C52 als Integrationskondensator aktiv ist und die Amplitude des Integatorausgangs von positiv nach negativ springt.

Phasenabschnitt 4 (75%-100%) entspricht wiederum Phasenabschnitt 2 (C52 aktiv), wobei auch hier die Amplitude negativ ist.

Die Schalterstellungen in den einzelnen Phasen sind der nachstehenden Tabelle zu entnehmen.

| | S3a | S3b | S3c | S3d | S3e | S3f |
|---|---|---|---|---|---|---|
| Phasenabschnitt 1 | ein | aus | aus | ein | aus | ein |
| Phasenabschnitt 2 | ein | aus | aus | ein | ein | aus |
| Phasenabschnitt 3 | aus | ein | ein | aus | aus | ein |
| Phasenabschnitt 4 | aus | ein | ein | aus | ein | aus |

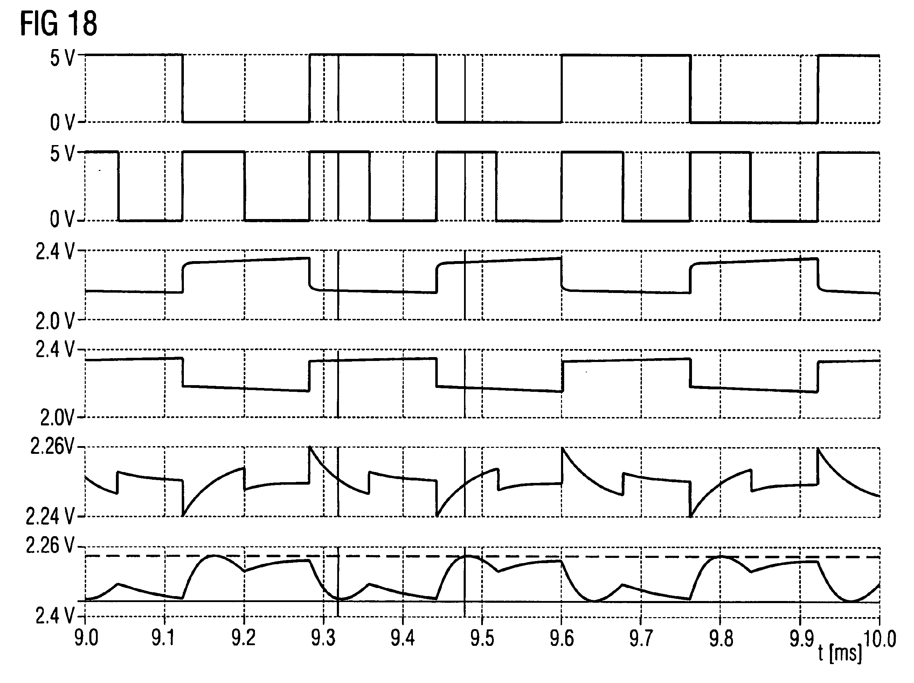

Somit ergibt sich der in Figur 18, Spur 4 dargestellte Kurvenverlauf des Kompensationssignals. Als Ergebnis davon reduziert sich das (gefilterte) Restsignal von ca 30mV (ss) bei einstufiger Kompensation auf ca 13mV (ss) bei zweistufiger Kompensation, also um weitere 7dB. Insgesamt ist das Störsignal nun um 16dB+7dB=23dB abgeschwächt.

Aus Figur 18 sind folgende Signale ersichtlich:

| | |
|---|---|
| Spur1: | Oszillatorsignal Phi1=3kHz, |
| Spur2: | Oszillatorsignal Phi2=6kHz, |
| Spur3: | im Differenzsignal ΔVs enthaltenes Störsignal, |
| Spur4: | zweistufig zusammengesetztes Kompensationssignal (am Ausgang des Integrators Amp5a), |
| Spur5: | Restsignal am Ausgang der Kompensationsschaltung, und |
| Spur6: | Restsignal am Ausgang des Reglers nach weiterer Filterung. |

Eine weitere Unterteilung der Integrationsintervalle führt zu einer zunehmenden Verbesserung dieser Abschwächung, aber auch zu einem größeren Hard- und Softwareaufwand.

Neben dem vorgestellten Realisierungsbeispiel sind auch alternative Ausführungen der Erfindung vorstellbar.

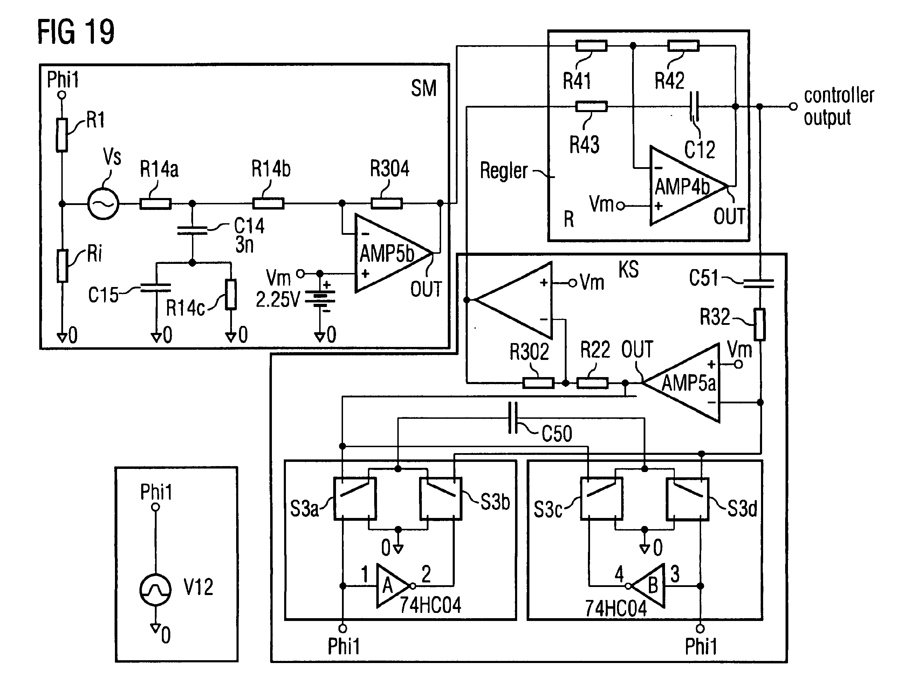

So läßt sich beispielsweise die Kompensationschaltung mit dem Regler R kombinieren. In Figur 19 ist die Integration der Kompensationsschaltung nach Figur 8 mit dem Regler R kombiniert, wodurch der Amplitudenverlust, bedingt durch den Spannungsteiler R302, R22 aus Figur 8, vermieden wird.

Zum Unterschied von der in den Figuren 8 und 17 beschriebenen Schaltung ist der Verstärker Amp4a hier nicht als Buffer, sondern mittels der Widerstände R22 und R302 als Inverter betrieben. Sein nichtinvertierender Eingang liegt auf der Mittenspannung Vm (2.25V). Der Ausgang des Inverters Amp4a stellt den Ausgang der Kompensationsschaltung dar und ist über einen Widerstand R43 mit dem invertierenden Eingang des Reglers Amp4b verbunden, ebenso wie bereits R41. Dadurch wird der Regler zu einem Summierer erweitert. Der Ausgang des Reglers ist mit dem Kondensator C51, dem Eingang der Kompensationsschaltung verbunden. Die Kompensationswirkung erfolgt nun durch die Summier-Eigenschaft des Reglers R.

Die beschriebenen Anordnungen lassen sich nicht nur bei einer Schaltungsanordnung zur Kompensation von Störsignalen in der Regelschleife einer linearen Lambdasonde, sondern ganz allgemein bei Regelschaltungen zur Kompensation von Störgrößen verwenden.

## Patentansprüche

1. Regelschleife einer linearen Lambdasonde (S) für eine Brennkraftmaschine, die mit einer Auswerteschaltung verbunden ist mit einer Schaltungsanordnung zur Kompensation von Störsignalen, welche einen Differenzverstärker (Diff_Amp) aufweist, welcher die Differenz (ΔVs) der in der Lambdasonde (S) gemessenen, mit einem von der Messung der Sondenimpedanz (Ris) hervorgerufenen Störsignal behafteten Nernstspannung (Vs) und einer auf eine Mittenspannung (Vm) bezogenen Referenzspannung (Vref) bildet, und mit einem Regler (R), welcher eine der Differenz (ΔVs) zugeordnete Regelspannung erzeugt, die von einer nachfolgenden Pumpstromquelle (Ip_pump) in einen Pumpstrom (Ip) gewandelt wird,
**dadurch gekennzeichnet,**
- **daß** zwischen dem Ausgang des Differenzverstärkers (Diff_Amp) und dem Eingang des Reglers (R) eine Kompensationsschaltung (KS) vorgesehen ist, die ein in seinem Kurvenverlauf dem Störsignal angenähertes Kompensationssignal mit zum Störsignal gleicher Amplitude und Frequenz (Phi1), jedoch um 180° verschobener Phase erzeugt, welches vom Differenzsignal (ΔVs) subtrahiert wird und dadurch das Störsignal weitgehend auslöscht, und
- **daß** die Kompensationsschaltung (KS) einen als Buffer (Amp4a) geschalteten Verstärker und einen Integrator (Amp5a) enthält, daß dem Eingang des Bufferverstärkers das Differenzsignal (ΔVs) und das Ausgangssignal des Integrators (Amp5a) zugeführt werden, und daß das Ausgangssignal des Bufferverstärkers dem invertierenden Eingang des Integrators (Amp5a) und dem Eingang des Reglers (R) zugeführt wird.

2. Regelschleife einer linearen Lambdasonde (S) für eine Brennkraftmaschine, die mit einer Auswerteschaltung verbunden ist mit einer Schaltungsanordnung zur Kompensation von Störsignalen, welche einen Differenzverstärker (Diff_Amp) aufweist, welcher die Differenz (ΔVs) der in der Lambdasonde (S) gemessenen, mit einem von der Messung der Sondenimpedanz (Ris) hervorgerufenen Störsignal behafteten Nernstspannung (Vs) und einer auf eine Mittenspannung (Vm) bezogenen Referenzspannung (Vref) bildet, und mit einem Regler (R), welcher eine der Differenz (ΔVs) zugeordnete Regelspannung erzeugt, die von einer nachfolgenden Pumpstromquelle (Ip_pump) in einen Pumpstrom (Ip) gewandelt wird,
**dadurch gekennzeichnet,**
- **daß** zwischen dem Ausgang des Differenzverstärkers (Diff_Amp) und dem Eingang des Reglers (R) eine Kompensationsschaltung (KS) vorgesehen ist, die ein in seinem Kurvenverlauf dem Störsignal angenähertes Kompensationssignal mit zum Störsignal gleicher Amplitude und Frequenz (Phi1), jedoch um 180° verschobener Phase erzeugt, welches vom Differenzsignal (ΔVs) subtrahiert wird und dadurch das Störsignal weitgehend auslöscht,
- **daß** der Regler (R) mit der Kompensationsschaltung (KS) kombiniert ist, welche einen als Inverter (Amp4a) geschalteten Verstärker und einen Integrator (Amp5a) enthält, daß der Regler (R) als Summierverstärker mit zwei Eingängen geschaltet ist,
**daß** dem einen Eingang des Reglers (R) das Differenzsignal (ΔVs) zugeführt wird, und
**daß** das Ausgangssignal des Reglers (R) dem Eingang des Integrators (Amp5a) zugeführt wird, dessen Ausgangssignal über den Inverter (Amp4a) dem zweiten Eingang des Reglers (R) zugeführt wird.

3. Regelschleife nach Anspruch 1 oder 2, **dadurch gekennzeichnet, daß** die Schaltungsanordnung eine Signalquelle (V12) mit einer Oszillatorfrequenz (Phi1) aufweist und der Integrator (Amp5a) einen Integrationskondensator (C50) enthält, welcher mittels eines Wechselschalters (S3a bis S3d) im Takt der Oszillatorfrequenz (Phi1) so umgepolt wird, daß in der einen - positiven - Phase der eine Anschluß des Integrationskondensators (C50) mit dem Ausgang des Integrators (Amp5a) und der andere Anschluß mit dem invertierenden Eingang des Integrators (Amp5a) verbunden ist, und in der anderen - negativen - Phase der eine Anschluß mit dem invertierenden Eingang und der andere Anschluß mit dem Ausgang des Integrators (Amp5a) verbunden ist.

4. Regelschleife nach Anspruch 1 oder 2, **dadurch gekennzeichnet, daß** der Integrator (Amp5a) wenigstens zwei Integrationskondensatoren (C50, C52) enthält, welche mittels Wechselschaltern (S3a bis S3f) im Takt der Oszillatorfrequenz (Phi1) so umgepolt werden, daß in untereinander gleichen, der Zahl der Integrationskondensatoren entsprechenden Zahl von Phasenabschnitten der einen - positiven - Phase nacheinander die einen Anschlüsse der Integrationskondensatoren (C50, C52) mit dem Ausgang des Integrators (Amp5a) und die anderen Anschlüsse mit dem invertierenden Eingang des Integrators (Amp5a) verbunden sind, und in untereinander gleichen, der Zahl der Integrationskondensatoren entsprechenden Zahl von Phasenabschnitten der anderen - negativen - Phase nacheinander die einen Anschlüsse mit dem invertierenden Eingang und die anderen Anschlüsse mit dem Ausgang des Integrators (Amp5a) verbunden sind.

5. Regelschleife nach Anspruch 1, **dadurch gekennzeichnet, daß** die Schaltungsanordnung eine Signalquelle (V12) mit einer Oszillatorfrequenz (Phi1) aufweist und das Störsignal und das Oszillatorsignal (Phi1, Phi2) mittels derselben Signalquelle (OSZ, V12, V15) erzeugt werden.

## Claims

1. Control loop of a linear lambda probe (S) for an internal combustion engine which is connected to an evaluation circuit with a circuit arrangement for compensating interference signals, which has a differential amplifier (Diff Amp) which forms the difference (ΔVs) between the Nernst voltage (Vs) which is measured in the lambda probe (S) and subjected to an interference signal caused by the measurement of the probe impedance (Ris) and a reference voltage (Vref) which is related to a centre voltage (Vm), and having a controller (R) which generates a controlling voltage which is assigned to the difference (ΔVs) and which is converted into a pumping current (Ip) by a subsequent pumping current source (Ip_pump), **characterized**
- **in that** a compensation circuit (KS) which generates a compensation signal which is approximated in its curve profile to the interference signal and has an amplitude and frequency (Phi1) which are identical to the interference signal but phase-shifted through 180°, which compensation signal is subtracted from the differential signal (ΔVs) and as a result largely cancels out the interference signal, is provided between the output of the differential amplifier (Diff_Amp) and the input of the controller (R), and
- **in that** the compensation circuit (KS) contains an amplifier which is connected as a buffer (Amp4a) and an integrator (Amp5a), in that the differential signal (ΔVs) and the output signal of the integrator (Amp5a) are fed to the input of the buffer amplifier, and in that the output signal of the buffer amplifier is fed to the inverting input of the integrator (Amp5a) and to the input of the controller (R).

2. Control loop of a linear lambda probe (S) for an internal combustion engine which is connected to an evaluation circuit with a circuit arrangement for compensating interference signals, which has a differential amplifier (Diff_Amp) which forms the difference (ΔVs) between the Nernst voltage (Vs) which is measured in the lambda probe (S) and subjected to an interference signal caused by the measurement of the probe impedance (Ris) and a reference voltage (Vref) which is related to a centre voltage (Vm), and having a controller (R) which generates a controlling voltage which is assigned to the difference (ΔVs) and which is converted into a pumping current (Ip) by a subsequent pumping current source (Ip_pump), **characterized**
- **in that** a compensation circuit (KS) which generates a compensation signal which is approximated in its curve profile to the interference signal and has an amplitude and frequency (Phi1) which are identical to the interference signal but phase-shifted through 180°, which compensation signal is subtracted from the differential signal (ΔVs) and as a result largely cancels out the interference signal, is provided between the output of the differential amplifier (Diff_Amp) and the input of the controller (R), and
- **in that** the controller (R) is combined with the compensation circuit (KS) which contains an amplifier which is connected as an inverter (Amp4a) and an integrator (Amp5a),
**in that** the controller (R) is connected as a summing amplifier to two inputs,
**in that** the differential signal (ΔVs) is fed to the one input of the controller (R), and
**in that** the output signal of the controller (R) is fed to the input of the integrator (Amp5a) whose output signal is fed to the second input of the controller (R) via the inverter (Amp4a).

3. Control loop according to Claim 1 or 2, **characterized in that** the circuit arrangement has a signal source (V12) with an oscillator frequency (Phi1) and the integrator (Amp5a) contains an integration capacitor (C50) whose polarity is reversed in synchronism with the oscillator frequency (Phi1) by means of an alternating switch (S3a to S3d), **in that**, in the one - positive - phase, the one terminal of the integration capacitor (C50) is connected to the output of the integrator (Amp5a) and the other terminal is connected to the inverting input of the integrator (Amp5a), and in the other - negative - phase the one terminal is connected to the inverting input and the other terminal is connected to the output of the integrator (Amp5a).

4. Control loop according to Claim 1 or 2, **characterized in that** the integrator (Amp5a) contains at least two integration capacitors (C50, C52) whose polarity is reversed in synchronism with the oscillator frequency (Phi1) by means of alternating switches (S3a to S3f) in such a way that, in identical numbers of phase sections, corresponding to the number of integration capacitors, of the one - positive - phase, the first terminals of the integration capacitors (C50, C52) are successively connected to the output of the integrator (Amp5a) and other terminals are connected to the inverting input of the integrator (Amp5a), and in identical numbers of phase sections, corresponding to the number of integration capacitors, of the other - negative - phase, the first terminals are successively connected to the inverting input and the other terminals to the output of the integrator (Amp5a).

5. Control loop according to Claim 1, **characterized in that** the circuit arrangement has a signal source (V12) with an oscillator frequency (Phi1) and the interference signal and the oscillator signal (Phi1, Phi2) are generated by means of the same signal source (OSZ, V12, V15).

## Revendications

1. Boucle de réglage d'une sonde lambda linéaire (S), destinée à un moteur à combustion interne, reliée à un circuit d'évaluation comportant un circuit de compensation des signaux parasites, muni d'un amplificateur différentiel (Diff-Amp) qui forme la différence (ΔVs) entre un potentiel de Nernst mesuré dans la sonde lambda (S) et affecté d'un signal parasite dû à la mesure de l'impédance de la sonde Ris, et une tension de référence (Vref) rapportée à une tension homogénéisée (Vm), et un régulateur (R) qui génère une tension de régulation selon la différence (ΔVs) qui est convertie par une source de courant de pompe (Ip_pump) subséquente en un courant de pompe (Ip).
**caractérisée en ce que**
- entre la sortie de l'amplificateur différentiel (Diff-Amp) et l'entrée du régulateur (R) est prévu un circuit de compensation (KS) qui génère un signal de compensation rapproché par sa courbe du signal parasite de mêmes amplitude et fréquence (Phi1) mais déphasé de 180° qui est soustrait du signal différentiel (ΔVs) et supprime ainsi largement le signal parasite et
- le circuit de compensation (KS) contient un amplificateur (Amp4a) branché comme tampon et un intégrateur (Amp5a), que le signal différentiel (ΔVs) et le signal de sortie de l'intégrateur (Amp5a) sont acheminés à l'entrée de l'amplificateur et que le signal de sortie de l'amplificateur tampon est acheminé vers l'entrée invertisseuse de l'intégrateur (Amp5a) et à l'entrée du régulateur (R).

2. Boucle de réglage d'une sonde lambda linéaire (S), destinée à un moteur à combustion interne, reliée à un circuit d'évaluation comportant un circuit de compensation des signaux parasites, muni d'un amplificateur différentiel (Diff-Amp) qui forme la différence (ΔVs) entre un potentiel de Nernst mesuré dans la sonde lambda (S) et affecté d'un signal parasite dû à la mesure de l'impédance de la sonde Ris et une tension de référence (Vref) rapportée à une tension homogénéisée (Vm), et un régulateur (R) qui génère une tension de régulation selon la différence (ΔVs) qui est convertie par une source de courant de pompe (Ip_pump) subséquente en un courant de pompe (Ip).
**caractérisée en ce que**
- entre la sortie de l'amplificateur différentiel (Diff-Amp) et l'entrée du régulateur (R) est prévu un circuit de compensation (KS) qui génère un signal de compensation rapproché par sa courbe du signal parasite de mêmes amplitude et fréquence (Phi1) mais déphasé de 180° qui est soustrait du signal différentiel (ΔVs) et supprime ainsi largement le signal parasite et
- que le régulateur (R) est combiné avec le circuit de compensation (KS) qui contient un amplificateur branché en inverseur (Amp4a) et un intégrateur (Amp5a),
que le régulateur (R) est branché comme additionneur avec deux entrées,
que le signal différentiel (ΔVs) est acheminé à une entrée du régulateur (R), et
que le signal de sortie du régulateur (R) est acheminé vers l'entrée de l'intégrateur (Amp5a), dont le signal de sortie est acheminé par le biais de l'inverseur (Amp4a) à la deuxième entrée du régulateur (R).

3. Boucle de régulation selon les revendications 1 ou 2, **caractérisée en ce que** le circuit présente une source de signal (V12) avec une fréquence d'oscillateur (Phi1) et que l'intégrateur (Amp5a) contient un condensateur d'intégration (C50) dont la fréquence est inversée au rythme de l'oscillateur (Phi1) à l'aide d'un interrupteur alternatif (S3a à S3d), de façon que, dans une première phase - positive -, une des connexions du condensateur d'intégration (C50) est reliée à la sortie de l'intégrateur (Amp5a) et que l'autre connexion est reliée à l'entrée inverseuse de l'intégrateur (Amp5a), et que, dans l'autre phase - négative -, une des connexions est reliée à l'entrée inverseuse et l'autre connexion à la sortie de l'intégrateur (Amp5a).

4. Boucle de régulation selon la revendication 1 ou 2, **caractérisée en ce que** l'intégrateur (Amp5a) présente aux moins deux condensateurs d'intégration (C50, C52) qui sont inversés au rythme de la fréquence de l'oscillateur (Phi1) à l'aide d'interrupteurs alternatifs (S3a à S3f), de façon que, dans des portions de phases égales entre elles, correspondant par le nombre au nombre de condensateurs d'une phase - positive -, certaines des connexions des condensateurs d'intégration (C50, C52) sont reliées à la sortie de l'intégrateur (Amp5a) et les autres connexions à l'entrée inverseuse de l'intégrateur (Amp5a) et que, dans des portions de phases égales entre elles, correspondant par le nombre au nombre de condensateurs d'une phase - négative -, certaines des connexions sont reliées à l'entrée inverseuse et les autres connexions à la sortie de l'intégrateur (Amp5a).

5. Boucle de régulation selon la revendication 1, **caractérisée en ce que** le circuit présente une source de signal (V12) avec une fréquence d'oscillateur (Phi1) et que le signal parasite et le signal de l'oscillateur (Phi1, Phi2) sont générés par la même source de signal (OSZ, V12, V15).
